**Europäisches Patentamt**

**European Patent Office**

**Office européen des brevets**

(19)

(11) Veröffentlichungsnummer : **0 350 586 B1**

(12) # EUROPÄISCHE PATENTSCHRIFT

(45) Veröffentlichungstag der Patentschrift :
**25.03.92 Patentblatt 92/13**

(51) Int. Cl.⁵ : **G01D 5/38,** G01D 5/36

(21) Anmeldenummer : **89108347.9**

(22) Anmeldetag : **10.05.89**

(54) **Lichtelektrische Positionsmesseinrichtung.**

(30) Priorität : **09.07.88 DE 3823314**

(43) Veröffentlichungstag der Anmeldung :
**17.01.90 Patentblatt 90/03**

(45) Bekanntmachung des Hinweises auf die
Patenterteilung :
**25.03.92 Patentblatt 92/13**

(84) Benannte Vertragsstaaten :
**DE FR GB IT**

(56) Entgegenhaltungen :
**WO-A-87/07944**

(56) Entgegenhaltungen :
**DE-A- 2 940 847**
**GB-A- 2 095 399**
**US-A- 3 344 700**
**US-A- 3 586 665**
**US-A- 3 748 486**

(73) Patentinhaber : **Dr. Johannes Heidenhain GmbH**
**Dr.-Johannes-Heidenhain-Strasse 5 Postfach 1260**
**W-8225 Traunreut (DE)**

(72) Erfinder : **Ernst, Alfons, Dipl.-Ing.**
**Traunring 62**
**W-8225 Traunreut (DE)**

## Beschreibung

Die Erfindung betrifft eine lichtelektrische Positionsmeßeinrichtung gemäß dem Oberbegriff des Anspruchs 1.

Derartige Positionsmeßeinrichtungen werden insbesondere bei Bearbeitungsmaschinen zur Messung der Relativlage eines Werkzeugs bezüglich eines zu bearbeitenden Werkstücks eingesetzt.

Aus dem Sonderdruck aus Zeiss Informationen Heft 77 "Zeiss Phocosin" von Adolf Weyrauch, Scho. VI/70 Pto ist im Absatz "Phocosin-Geber" eine lichtelektrische Positionsmeßeinrichtung bekannt, bei der die Teilung eines mit dem einen Objekt verbundenen Teilungsträgers von einer mit dem anderen Objekt verbundenen Abtasteinrichtung im Durchlicht abgetastet wird, die eine Beleuchtungseinheit in Form eines Lichtleiters und eines Kondensors, eine Abtastplatte mit einer Abtastteilung sowie eine Sensoreinheit aus vier in Meßrichtung beabstandeten Photoelementen zur Erzeugung von vier periodischen Abtastsignalen mit einem gegenseitigen Phasenversatz von 90° aufweist. Durch partielle Verschmutzungen der Teilung und örtliche Teilungsfehler können durch diese vier nebeneinanderliegenden, örtlich voneinander getrennten Abtastfelder für die vier Photoelemente unterschiedliche Amplituden der paarweise voneinander zu subtrahierenden Abtastsignale auftreten. Diese Fehlerquelle wird durch die Verwendung eines einzigen Abtastfeldes vermieden. Bei dieser Einfeldabtastung wird ein bestimmter Abstand zwischen der Teilung des Teilungsträgers und der Abtastteilung der Abtastplatte vorgesehen und erfolgt die Durchstrahlung der Teilung und der Abtastteilung mit unterschiedlicher Neigung für die vier Photoelemente, so daß die vier Abtastsignale den gegenseitigen Phasenversatz von 90° aufweisen. Diese statisch wirkende Meßeinrichtung ist relativ abstands- und verschmutzungsempfindlich.

In der Internationalen Veröffentlichung WO-A- 87407944 ist eine lichtelektrische Positionsmeßeinrichtung zur Messung der Relativlage zweier Objekte offenbart, bei der die Teilung eines mit dem einen Objekt verbundenen Teilungsträgers von einer mit dem anderen Objekt verbundenen Abtasteinrichtung im Auflicht abgetastet wird, die drei in Meßrichtung versetzt angeordnete Lichtquellen, eine zweigeteilte Abtastplatte mit zwei gegeneinander phasenverschobenen Abtastteilungen sowie drei zugeordnete Photoelemente zur Erzeugung dreier gegeneinander phasenverschobener periodischer Abtastsignale aufweist. Bei dieser statisch wirkenden Meßeinrichtung mit Einfeldabtastung bedingt die zweigeteilte Abtastplatte einen großen Abstand zwischen der Abtastplatte und dem Teilungsträger, der eine relativ grobe Teilungsperiode der Teilung und der Abtastteilungen zur Folge hat, so daß die Meßgenauigkeit nicht ausreichend ist; durch diesen großen Abstand ist die Meßeinrichtung empfindlich gegenüber Verbiegungen des Teilungsträgers und gegenüber Verunreinigungen.

In der US-A- 3 344 700 ist eine lichtelektrische Positionsmeßeinrichtung zur Messung der Relativlage zweier Objekte beschrieben, bei der die Teilung eines mit dem einen Objekt verbundenen Teilungsträgers von einer mit dem anderen Objekt verbundenen Abtasteinrichtung im Auflicht abgetastet wird, die zwei Lichtquellen, eine Mikroprismen-Abtastplatte sowie ein Photoelement aufweist; die beiden Lichtquellen sind mit gegeneinander um 180° phasenversetzten Versorgungsspannungen beaufschlagt. Diese dynamisch wirkende Meßeinrichtung mit Einfeldabtastung ist wegen der schwierig herzustellenden Mikroprismen-Abtastplatte aufwendig aufgebaut und relativ abstands- und verschmutzungsempfindlich.

Aus dem Buch "Winkel- und Wegmessung im Maschinenbau" von Dr.-Ing. Hans Walcher, zweite Auflage 1985 VDI-Verlag GmbH, Düsseldorf im Absatz 3.7.5. "Dynamische photoelektrische Rasterabtastung" Seiten 83-89 ist noch eine dynamisch wirkende Positionsmeßeinrichtung bekannt, bei der die Teilung eines mit dem einen Objekt verbundenen Teilungsträgers von einer mit dem anderen Objekt verbundenen Abtasteinrichtung im Auflicht abgetastet wird, die eine Lichtquelle, einen Teilerspiegel, eine Feldlinse und ein Objektiv sowie eine Sensoreinheit in Form einer selbtabtastenden Photoelementenanordnung aufweist. Diese Photoelementenanordnung, die gleichzeitig eine Abtastteilung darstellt, auf die die Teilung des Teilungsträgers abgebildet wird, erzeugt ein periodisches Abtastsignal, das die relative Weginformation enthält; aus diesem periodischen Abtastsignal werden nach einer Filterung in einer Interpolationseinrichtung die Meßwerte für die Relativlage der beiden Objekte gewonnen. Diese aufwendig aufgebaute Meßeinrichtung ist empfindlich gegenüber partiellen Verunreinigungen.

In der DE-A- 29 40 847 ist eine lichtelektrische Positionsmeßeinrichtung mit einer trägerfrequenten Abtastung und Interpolation zur Messung der Relativlage zweier Objekte beschrieben, bei der die Teilung eines mit dem einen Objekt verbundenen Teilungsträgers von einer mit dem anderen Objekt verbundenen Abtasteinrichtung im Durchlicht abgetastet wird. Die Abtasteinrichtung enthält zwei Lichtquellen, eine Abtastplatte mit vier jeweils um ein Viertel der Gitterkonstanten der Teilung zueinander versetzten Abtastteilungen sowie vier den Abtastteilungen zugeordnete Photoelemente. Zwei periodische Versorgungsspannungen mit einem gegenseitigen Phasenversatz von 90° beaufschlagen jeweils eine der beiden Lichtquellen; jeweils zwei Abtastteilungen sind einer Lichtquelle zugeordnet. Aus den Abtastsignalen der vier Photoelemente wird ein Summensignal gebildet, dessen Phase mit der Phase einer der Versorgungsspannungen der beiden Lichtquellen zur Gewinnung der Meßwerte für die Relativlage der beiden Objekte verglichen wird. Diese Meßeinrichtung weist keine Einfeldabtastung auf und ist empfindlich gegenüber partiellen Verunreinigungen.

Aus der DE-A- 33 11 118 ist eine lichtelektrische Positionsmeßeinrichtung zur Messung der Relativlage zweier Objekte bekannt, bei der die Teilung eines mit dem einen Objekt verbundenen Teilungsträgers von einer mit dem anderen Objekt verbundenen Abtasteinrichtung abgetastet wird. Zur Vermeidung einer Störung des Strahlengangs der lichtelektrischen Abtastung durch Flüssigkeitstropfen sind die Abtasteinrichtung hermetisch verschlossen und der Abstand zwischen den von den Lichtstrahlen beaufschlagten Flächen des Teilungsträgers und der Abtasteinrichtung so gering bemessen, daß aus gegebenenfalls auf diesen Flächen des Teilungsträgers befindlichen Flüssigkeitstropfen im Bereich der Abtasteinrichtung eine durchgehend homogene benetzende Flüssigkeitsschicht gebildet wird.

Der Erfindung liegt die Aufgabe zugrunde, eine lichtelektrische Positionsmeßeinrichtung der genannten Gattung anzugeben, die unempfindlich gegenüber Verunreinigungen ist.

Diese Aufgabe wird erfindungsgemäß durch die Merkmale des Anspruchs 1 gelöst.

Die mit der Erfindung erzielten Vorteile bestehen insbesondere darin, daß die vorgeschlagenen Maßnahmen bei einer lichtelektrischen Positionsmeßeinrichtung auf einfache Weise eine hohe Meßgenauigkeit und Meßsicherheit trotz auftretender Verunreinigungen ermöglichen, die bei einem Einsatz der Positionsmeßeinrichtung bei Bearbeitungsmaschinen nicht zu vermeiden sind, so daß bei der Bearbeitung von Werkstücken Fehlzeiten und Ausschuß reduziert werden. Derartige Verunreinigungen können zwar die Amplitude des vom Photoelement erzeugten Wechselspannungssignals verändern, nicht jedoch seine Phasenlage, aus der die Meßwerte für die Relativlage der beiden Objekte ermittelt werden.

Vorteilhafte Ausbildungen der Erfindung entnimmt man den abhängigen Ansprüchen.

Ein Ausführungsbeispiel der Erfindung wird anhand der Zeichnung näher erläutert.

Es zeigen

Figur 1 eine lichtelektrische Positionsmeßeinrichtung in einer Längsansicht und

Figur 2 einen Teilungsträger mit einer Anordnung von Lichtquellen.

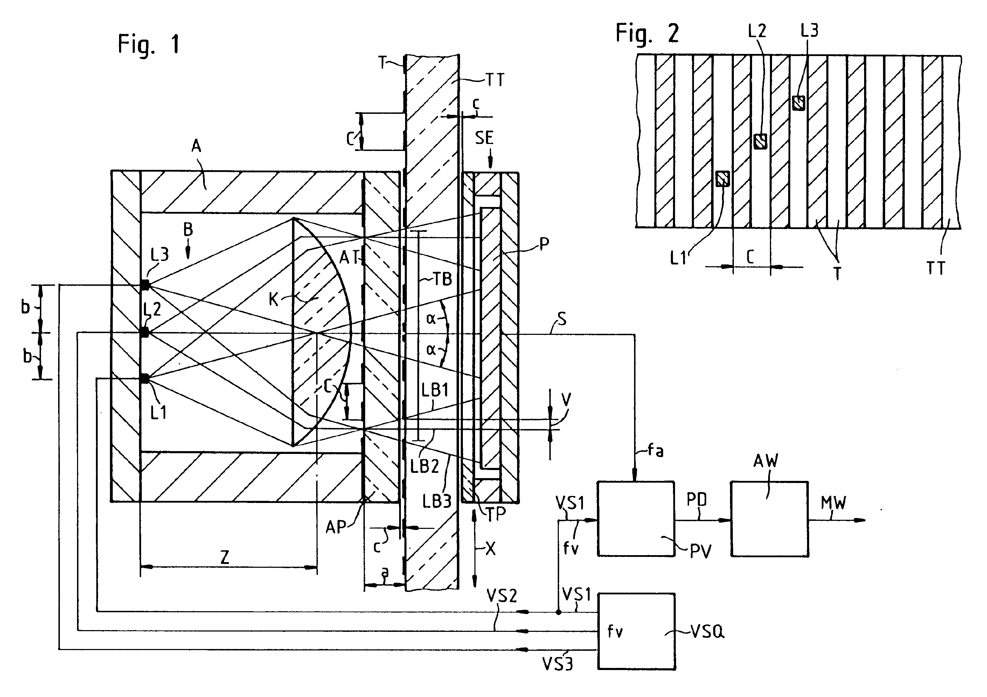

In Figur 1 ist schematisch eine lichtelektrische Positionsmeßeinrichtung zur Messung der Relativlage zweier Objekte in einer Längsansicht dargestellt. Die Gitterteilung T eines transparenten Teilungsträgers TT, der mit dem nicht gezeigten beweglichen Objekt verbunden ist, wird von einer mit dem nicht gezeigten stationären Objekt verbundenen Abtasteinrichtung A abgetastet. Diese Abtasteinrichtung A weist eine Beleuchtungseinheit B, eine Abtastplatte AP mit einer Abtastgitterteilung AT sowie eine Sensoreinheit SE auf. Die beiden Objekte können durch einen beweglichen Schlitten und das stationäre Bett einer nicht gezeigten Bearbeitungsmaschine gebildet sein.

Die Beleuchtungseinheit B enthält drei diskrete Lichtquellen L1, L2, L3 sowie einen Kondensor K zur Beleuchtung eines Teilungsbereichs TB der Teilung T des Teilungsträgers TT für eine sogenannte Einfeldabtastung. Die drei periodischen Versorgungsspannungen VS1, VS2, VS3 für die drei diskreten Lichtquellen L1, L2, L3 besitzen für jeweils benachbarte Lichtquellen L1, L2, L3 einen jeweiligen gegenseitigen Phasenversatz von 360°/3 = 120°.

Die drei diskreten Lichtquellen L1, L2, L3 weisen in Meßrichtung X einen gegenseitigen Abstand b auf, so daß die drei aus dem Kondensor K austretenden parallelen Lichtstrahlenbündel LB1, LB2, LB3 der drei Lichtquellen L1, L2, L3 für jeweils benachbarte Lichtquellen L1, L2, L3 einen Winkel α miteinander einschließen. Zwischen der Abtastteilung AT der Abtastplatte AP und der Teilung T des Teilungsträgers TT besteht ein relativ großer paralleler Abstand a; die Abtastteilung AT und die Teilung T besitzen eine identische Gitterkonstante C.

Der Winkel α zwischen den drei Lichtstrahlenbündeln LB1, LB2, LB3 der drei Lichtquellen L1, L2, L3 sowie der parallele Abstand a zwischen der Abtastteilung AT der Abtastplatte AP und der Teilung T des Teilungsträgers TT werden derart vorgegeben, daß die parallelen Lichtstrahlenbündel LB1, LB2, LB3 jeweils benachbarter Lichtquellen L1, L2, L3 im vom Kondensor K beleuchteten Teilungsbereich TB der Teilung T in Meßrichtung X einen gegenseitigen Versatz V = C/3 aufweisen.

Den drei Lichtquellen L1, L2, L3, die in der Brennebene des Kondensors K angeordnet sind, ist in der Sensoreinheit SE ein gemeinsames Photoelement P zugeordnet. Die drei Lichtstrahlenbündel LB1, LB2, LB3 der drei Lichtquellen L1, L2, L3 durchsetzen die Abtastteilung AT der transparenten Abtastplatte AP und den jeweiligen gemeinsamen Teilungsbereich TB der Teilung T des transparenten Teilungsträgers TT und fallen auf das gemeinsame Photoelement P, das ein periodisches Abtastsignal S in Form eines Wechselspannungssignals erzeugt. Dieses periodische Abtastsignal S wird mitsamt einer Versorgungsspannung VS1 der drei Versorgungsspannungen VS1, VS2, VS3 der drei Lichtquellen L1, L2, L3 einer Phasenauswerteeinheit in Form eines Phasenvergleichers PV zugeführt. Die drei Versorgungsspannungen VS1, VS2, VS3 werden von einer Versorgungsspannungsquelle VSQ geliefert und besitzen die gemeinsame Frequenz fv.

Die Frequenz fa des vom Photoelement P erzeugten periodischen Abtastsignals S ist beim Stillstand der Positionsmeßeinrichtung mit der Frequenz fv der drei Versorgungsspannungen VS1, VS2, VS3 identisch. Beim Meßvorgang ändert sich jedoch die Phasenlage PA des periodischen Abtastsignals S gegenüber der Phasenlage PV der periodischen Versorgungsspannung VS1 infolge der Relativbewegung des Teilungsträgers TT gegenüber der Abtasteinrichtung A in Meßrichtung X. Die Phasendifferenz PD zwischen der Phasenlage PA des periodischen Abtastsignals S und der Phasenlage PV der periodischen Versorgungsspannung VS1 wird vom Phasenvergleicher PV ermittelt und einer Auswerteeinrichtung AW zur Bildung von interpolierten Meßwerten MW für die Relativlage der beiden Objekte zugeführt; bei diesen interpolierten Meßwerten MW sind Unterteilungsfaktoren 100 und höher möglich.

Die Abtastplatte AP ist so angeordnet, daß die Abtastteilung AT den relativ großen parallelen Abstand a von der Teilung T des Teilungsträgers TT aufweist und trotzdem zwischen der Abtastplatte AP und dem Teilungsträger TT nur ein kleiner paralleler Abstand c besteht; dieser gegenüber dem großen Abstand a kleine Abstand c wird dadurch erzielt, daß die Abtastteilung AT auf der dem Teilungsträger TT abgewandten Oberfläche der Abtastplatte AP angeordnet ist. Dieser parallele Abstand c ist so gering bemessen, daß gegebenenfalls auf dem Teilungsträger TT befindliche Flüssigkeitstropfen im Bereich der Abtastplatte AP eine durchgehend homogene benetzende Flüssigkeitsschicht zwischen der Abtastplatte AP und dem Teilungsträger TT bilden; Flüssigkeitstropfen mit optisch wirksamen Oberflächen sind somit zwischen der Abtastplatte AP und dem Teilungsträger TT nicht möglich.

Die Meßgenauigkeit dieser Positionsmeßeinrichtung hängt entscheidend davon ab, daß der Abstand a zwischen der Abtastteilung AT der Abtastplatte AP und der Teilung T des Teilungsträgers TT konstant gehalten wird, da sich durch den Winkel $\alpha$ zwischen den parallelen Lichtstrahlenbündeln LB1, LB2, LB3 der drei Lichtquellen L1, L2, L3 die Phasenlage PA des periodischen Abtastsignals S des Photoelements P bei Abstandsänderungen $\Delta a$ des Abstandes a ändert. Die Konstanthaltung dieses Abstandes a kann in nicht dargestellter Weise dadurch erfolgen, daß die Abtasteinrichtung A auf Gleitschuhen oder auf Kugellagern auf der Oberfläche des Teilungsträgers TT geführt wird. Durch Wahl einer relativ großen Gitterkonstanten C für die Teilung T und für die Abtastteilung AT werden ein großer Abstand a und damit ein sehr kleiner Winkel $\alpha$ ermöglicht, so daß beispielsweise durch Unrundlauf der Kugellager der Abtasteinrichtung A bedingte Abstandsänderungen $\Delta a$ des Abstandes a keinen merklichen Einfluß auf die Meßgenauigkeit haben.

Als Zahlenbeispiel beträgt der in Meßrichtung X wirksame Abstand b zwischen den Lichtquellen L1, L2, L3 bei einer Brennweite z = 15 mm des Kondensors K, einem Abstand a = 1mm zwischen der Abtastteilung AT und der Teilung T und einer Gitterkonstanten C = 100 $\mu$m der Abtastteilung AT und der Teilung T:
b = z · C/3a = 0,5 mm.

Ein derartig kleiner Abstand b kann durch eine spezielle Halbleiterlichtquelle realisiert werden, bei der die drei Lichtquellen L1, L2, L3 in Meßrichtung X auf einem Substrat in integrierter Form in diesem entsprechenden Abstand b nebeneinander aufgebracht sind. Eine andere Möglichkeit besteht nach Figur 2 darin, drei handelsübliche Halbleiterlichtquellen L1, L2, L3 so anzuordnen, daß sie auf einer Linie schräg zur Meßrichtung X liegen und in Meßrichtung X den entsprechenden Abstand b aufweisen.

Besitzen die drei periodischen Versorgungsspannungen VS1, VS2, VS3 für die drei Lichtquellen L1, L2, L3 einen sinusförmigen Verlauf, so erzeugt das gemeinsame Photoelement P ein periodisches Abtastsignal S mit einem weitgehend oberwellenfreien sinusförmigen Verlauf. Bei einem rechteckförmigen Verlauf der drei periodischen Versorgungsspannungen VS1, VS2, VS3 ist das periodische Abtastsignal S mit Oberwellen behaftet, die durch ein nicht gezeigtes Filter weitgehend beseitigt werden können. Eine weitere Reduzierung der Oberwellen des periodischen Abtastsignals S kann dadurch erzielt werden, daß die drei Versorgungsspannungen VS1, VS2, VS3 folgende sich überlappende Einschaltzustände für die drei Lichtquellen L1, L2, L3 aufweisen:

| Zustände | Lichtquellen |
|:---:|:---:|
| 1 | L1 |
| 2 | L1 + L2 |
| 3 | L2 |
| 4 | L2 + L3 |
| 5 | L3 |
| 6 | L3 + L1 u.s.w. |

Leuchten beispielsweise die beiden Lichtquellen L1, L2 gleichzeitig, so entsteht ein periodisches Abtastsignal S wie von einer Lichtquelle, die zwischen den beiden Lichtquellen L1, L2 angeordnet ist.

Um sicherzustellen, daß die drei Lichtquellen L1, L2, L3 gleiche Helligkeiten über ihre gesamte Lebensdauer aufweisen, kann in nicht dargestellter Weise ein Teil ihrer Lichtströme auf ein Referenzphotoelement geleitet und die drei Versorgungsspannungen VS1, VS2, VS3 so geregelt werden, daß an dem Referenzphotoelement immer ein konstantes Ausgangsignal erzeugt wird.

Die Meßgenauigkeit der vorgeschlagenen Positionsmeßeinrichtung wird durch partielle Verunreinigungen der Teilung T des Teilungsträgers TT und/oder der Abtastteilung AT der Abtastplatte AP wegen der Einfeldabtastung nicht beeinträchtigt. Die Amplitude des periodischen Abtastsignals S des Photoelements P kann aber durch derartige Verunreinigungen im Laufe der Zeit allmählich abnehmen. Durch einen nicht gezeigten weiteren Regler können aber die drei Lichtquellen L1, L2, L3 zur Kompensation derartiger Verunreinigungen und/oder einer Alterung der Lichtquellen L1, L2, L3 heller geregelt werden, so daß die Amplitude des vom Photoelement P erzeugten Wechselspannungssignals S konstant bleibt.

Ganz allgemein werden n Lichtquellen Ln mit n = 3, 4, ... verwendet; die periodischen Versorgungsspannungen VSn jeweils benachbarter Lichtquellen Ln besitzen einen gegenseitigen Phasenversatz von 360°/n und die parallelen Lichtstrahlenbündel LBn weisen in Meßrichtung X einen gegenseitigen Versatz V = C/n auf. Mit wachsender Anzahl n der Lichtquellen Ln reduzieren sich die Oberwellen im periodischen Abtastsignal S des Photoelements P.

In bekannter Weise können zum Schutz gegen Verunreinigungen der Teilungsträger TT mit der Teilung T und die Abtasteinrichtung A in einem Gehäuse untergebracht sein, dessen Längsschlitz durch Dichtlippen verschlossen ist, durch die ein Mitnehmer zur Verbindung der Abtasteinrichtung A mit dem zu messenden Objekt hindurchgreift; eine derartige gekapselte Positionsmeßeinrichtung ist in der DE-A- 33 11 118 beschrieben.

Weiterhin können die Teilung T des Teilungsträgers TT durch ein aufgekittetes Deckglas (nicht dargestellt) und das Photoelement P durch eine vorgesetzte transparente Platte TP vor einer Benetzung durch Flüssigkeiten geschützt sein. Zwischen der Oberfläche der transparenten Platte TP und der zugewandten Oberfläche des Teilungsträgers TT besteht ebenfalls der Abstand c.

Das Photoelement P kann in nicht gezeigter Weise auch durch ein Photoelement mit kleiner lichtempfindlicher Fläche und entsprechend geringerer Kapazität ersetzt werden, dem eine Sammellinse vorgeschaltet ist.

Der den n diskreten Lichtquellen Ln gemeinsame Kondensor K kann auch entfallen oder es werden in nicht gezeigter Weise jeder Lichtquelle Ln ein eigener Kondensor zugeordnet.

Die Erfindung ist bei lichtelektrischen Positionsmeßeinrichtungen in Form von Längenmeßeinrichtungen oder Winkelmeßeinrichtungen einsetzbar.

## Patentansprüche

1. Lichtelektrische Positionsmeßeinrichtung zur Messung der Relativlage zweier Objekte, bei der die Gitterteilung (T) eines mit dem einen Objekt verbundenen Teilungsträgers (TT) von einer mit dem anderen Objekt verbundenen Abtasteinrichtung (A) berührungsfrei abgetastet wird, die eine Beleuchtungseinheit (B), eine Abtastplatte (AP) mit einer Abtastgitterteilung (AT) sowie eine Sensoreinheit (SE) aufweist, bei der die Beleuchtungseinheit (B) mehrere in Meßrichtung versetzt angeordnete Lichtquellen (L1, L2, L3) aufweist, die eine Versorgungsspannungsquelle (VSQ) aufweist, welche die Lichtquellen (L1, L2, L3) mit gegeneinander phasenversetzten Versorgungsspannungen (VS1, VS2, VS3) beaufschlagt , bei der die Gitterteilung (T) des Teilungsträgers (TT), die Abtastgitterteilung (AT) der Abtastgitterplatte (AP) und die Sensoreinheit (SE) so angeordnet sind, daß die von den Lichtquellen (L1, L2, L3) ausgehenden Lichtstrahlenbündel (LB1, LB2, LB3) die Gitterteilung (T) des Teilungsträgers (TT) und die Abtastgitterteilung (AT) der Abtastplatte (AP) durchsetzen und auf die Sensoreinheit (SE) fallen und bei der eine Phasenauswerteeinheit (PV) vorgesehen ist, gekennzeichnet durch folgende Merkmale:

a) die Beleuchtungseinheit (B) enthält mindestens drei Lichtquellen (Ln) (n = 3, 4, 5 ...) zur Beleuchtung eines gemeinsamen Teilungsbereiches (TB) der Gitterteilung (T) des Teilungsträgers (TT);

b) die Versorgungsspannungsquelle (VSQ) liefest n periodische Versorgungsspannungen (VSn) für die jeweils benachbarten Lichtquellen (Ln), wobei die Versorgungsspannungen (VSn) einen gegenseitigen Phasenversatz von 360°/n besitzen;

c) der Abstand c zwischen benachbarten Oberflächen der Abtastplatte (AP) und des Teilungsträgers (TT) ist wesentlich geringer als der Abstand a zwischen der Abtastgitterteilung (AT) und der Gitterteilung (T);

d) der Abstand a zwischen der Abtastgitterteilung (AT) der Abtastplatte (AP) und der Gitterteilung (T) des Teilungsträgers (TT) und ein Winkel $\alpha$ zwischen den Lichtstrahlenbündeln (LBn) jeweils benachbarter Lichtquellen (Ln) sind derart vorgegeben, daß die Lichtstrahlenbündel (LBn) jeweils benachbarter Lichtquellen (Ln) im beleuchteten Teilungsbereich (TB) der Gitterteilung (T) mit der Teilungsperiode C einen gegenseitigen Versatz V = C/n in Meßrichtung X aufweisen;

e) die Sensoreinheit ist mit der Phasenanswerteeinheit (PV) so verbunden, daß das von der Sensoreinheit (SE) erzeugte periodische Abtastsignal (S) der Phasenauswerteeinheit (PV) zugeführt wird.

2. Meßeinrichtung nach Anspruch 1, dadurch gekennzeichnet, daß den n Lichtquellen (Ln) ein gemeinsamer Kondensor (K) zugeordnet ist.

3. Meßeinrichtung nach Anspruch 1, dadurch gekennzeichnet, daß die Abtastteilung (AT) der Abtasteinrichtung (A) auf der einen Oberfläche der Abtastplatte (AP) angeordnet ist, die der Teilung (T) des Teilungsträgers (TT) zur Erzielung des Abstandes a abgewandt ist, und daß zwischen der anderen Oberfläche der Abtastplatte (AP) und der zugewandten Oberfläche des Teilungsträgers (TT) der Abstand c besteht.

4. Meßeinrichtung nach Anspruch 1, dadurch gekennzeichnet, daß die Abtasteinrichtung (A) zur Konstanthaltung des Abstandes a zwischen der Abtastteilung (AT) und der Teilung (T) auf dem Teilungsträger (TT) geführt ist.

5. Meßeinrichtung nach Anspruch 1, dadurch gekennzeichnet, daß die n Lichtquellen (Ln) in integrierter Form auf einem Substrat mit einem gegenseitigen Abstand b in Meßeinrichtung X angeordnet sind.

6. Meßeinrichtung nach Anspruch 1, dadurch gekennzeichnet, daß die n Lichtquellen (Ln) gesondert auf einer Linie schräg zur Meßrichtung X mit einem gegenseitigen Abstand b in Meßrichtung X angeordnet sind.

7. Meßeinrichtung nach Anspruch 1, dadurch gekennzeichnet, daß den n Lichtquellen (Ln) ein Referenzphotoelement und ein Regler zur Regelung der n Versorgungsspannungen (VSn) zugeordnet ist.

8. Meßeinrichtung nach Anspruch 1, dadurch gekennzeichnet, daß die Teilung (T) des Teilungsträgers (TT) durch ein aufgekittetes Deckglas geschützt ist.

9. Meßeinrichtung nach Anspruch 1, dadurch gekennzeichnet, daß das Photoelement (P) der Sensoreinheit (SE) durch eine vorgesetzte transparente Platte (TP) geschützt ist.

10. Meßeinrichtung nach den Ansprüchen 3 und 9, da durch gekennzeichnet, daß zwischen der Oberfläche der transparenten Platte (TP) und der zugewandten Oberfläche des Teilungsträgers (TT) ebenfalls der Abstand c besteht.

11. Meßeinrichtung nach Anspruch 1, dadurch gekennzeichnet, daß das periodische Abtastsignal (S) gemeinsam mit einer Versorgungsspannung (VSn) der Phasenauswerteeinheit (PV) zugeführt wird.

## Claims

1. Photoelectric position measuring device for measuring the relative position of two objects, in which the grid division (T) of a division carrier (TT) connected to one object is scanned in a non-contact manner by a scanning device (A) connected to the other object, said scanning device (A) having a lighting unit (B), a scanner plate (AP) with a scanner grid division (AT), and a sensor unit (SE), in which the lighting unit (B) has several light sources (L1, L2, L3) offset in the direction of measurement, and which have a supply voltage source (VSQ) which charges the light sources (L1, L2, L3) with mutually phase-offset supply voltages (VS1, VS2, VS3), in which the grid division (T) of the division carrier (TT), the scanning grid division (AT) of the scanner grid plate (AP) and the sensor unit (SE) are so disposed that the light beams (LB1, LB2, LB3) emerging from the light sources (L1, L2, L3) penetrate the grid division (T) of the division carrier (TT) and the scanner grid division (AT) of the scanner plate (AP) and fall on the sensor unit (SE), and in which a phase-evaluation unit (PV) is provided, characterised by the following features:

a) the lighting unit (B) contains at least three light sources (Ln) (n = 3, 4, 5 ...) for illuminating a common division area (TB) of the grid division (T) of the division carrier (TT);

b) the supply voltage source (VSQ) delivers n periodic supply voltages (VSn) for the respectively adjacent light sources (Ln), and the supply voltages (VSn) have a mutual phase offsetting of $360°/n$;

c) the space c between adjoining surfaces of the scanner plate (AP) and the division carrier (TT) is substantially less than the space a between the scanning grid division (AT) and the grid division (T);

d) the space a between the scanning grid division (AT) of the scanner plate (AP) and the grid division (T) of the division carrier (TT) and an angle between the light beams (LBn) of respectively adjacent light sources (Ln) are so given that the light beams (LBn) of respectively adjacent light sources (Ln) have, in the illuminated division area (TB) of the grid division (T) a mutual offsetting $V = C/n$ with the division period C, in the measurement direction X;

e) the sensor unit is so connected to the phase-evaluation unit (PV) that the periodic scanning signal (S) generated by the sensor unit (SE) is fed to the phase-evaluation unit (PV).

2. Measuring device according to Claim 1, characterised in that a common condenser (K) is associated with the n light sources (Ln).

3. Measuring device according to Claim 1, characterised in that the scanner division (AT) of the scanner device (A) is disposed on one surface of the scanner plate (AP) which faces away from the division (T) of the division carrier (TT) in order to obtain the spacing a, and in that the spacing c exists between the other surface of the scanner plate (AP) and the facing surface of the division carrier (TT).

4. Measuring device according to Claim 1, characterised in that the scanner device (A) is guided on the division carrier (TT) in order to maintain constant the spacing a between the scanner division (AT) and the division (T).

5. Measuring device according to Claim 1, characterised in that the n light sources (Ln) are disposed in an integrated form on a substrate with a mutual spacing b in measuring direction X.

6. Measuring device according to Claim 1, characterised in that the n light sources (Ln) are disposed separately on a line oblique to the measuring direction X with a mutual spacing b in measuring direction X.

7. Measuring device according to Claim 1, characterised in that there is associated with the n light sources (Ln) a reference photo element and a regulator for regulating the n supply voltages (VSn).

8. Measuring device according to Claim 1, characterised in that the division (t) of the division carrier (TT) is protected by a cover glass cemented in place.

9. Measuring device according to Claim 1, characterised in that the photo element (p) of the sensor unit (SE) is protected by a covering transparent plate (TP).

10. Measuring device according to Claims 3 and 9, characterised in that the spacing c likewise exists between the surface of the transparent plate (TP) and the facing surface of the division carrier (TT).

11. Measuring device according to Claim 1, characterised in that the periodic scanning signal (s) is passed, in common with a supply voltage (VSn), to the phase-evaluation unit (PV).


**Revendications**

1. Dispositif de mesure de position photo-électrique pour la mesure de la position relative de deux objets, dans lequel la graduation de réseau (T) d'un support de graduation (TT) lié à l'un des objets est lue sans contact par un dispositif de lecture (A) lié à l'autre objet, qui comporte une unité d'éclairage (B), une plaque de lecture (AP) munie d'une graduation de réseau de lecture (AT) ainsi qu'une unité de capteurs (SE), dans lequel l'unité d'éclairage (B) présente plusieurs sources lumineuses (L1, L2, L3) décalées dans la direction de mesure et une source d'alimentation en courant électrique (VSQ) qui alimente les sources lumineuses (L1, L2, L3) avec des tensions d'alimentation (VS1, VS2, VS3) mutuellement déphasées, dans lequel la graduation de réseau (T) du support de graduation (TT), la graduation du réseau de lecture (AT) de la plaque de lecture (AP) et l'unité de capteurs (SE) sont agencés de manière telle que les faisceaux de rayons lumineux (LB1, LB2, LB3) issus des sources lumineuses (L1, L2, L3) traversent la graduation de réseau (T) du support de graduation (TT) et la graduation du réseau de lecture (AT) de la plaque de lecture (AP) et frappent l'unité de capteurs (SE), et dans lequel il est prévu une unité d'exploitation de phase (PV), caractérisé par les caractéristiques suivantes:
   a) l'unité d'éclairage (B) comporte au moins trois sources lurnineuses (Ln) (n = 3, 4, 5...) éclairant une zone de graduation (TB) commune de la graduation de réseau (T) du support de graduation (TT);
   b) la source d'alimentation en courant électrique (VSQ) délivre n tensions d'alimentation (VSn) périodiques aux sources lumineuses (Ln) voisines les unes des autres, les tensions d'alimentation (VSn) présentant un déphasage mutuel de $360°/n$;
   c) la distance centre les surfaces contigües de la plaque de lecture (AP) et du support de graduation (TT) est sensiblement inférieure à la distance a entre la graduation du réseau de lecture (AT) et la graduation de réseau (T);
   d) la distance a entre la graduation du réseau de lecture (AT) de la plaque de lecture (AP) et la graduation de réseau (T) du support de graduation (TT) et l'angle $\alpha$ entre les faisceaux de rayons lumineux (LBn) de sources lumineuses (Ln) respectivement voisines sont prédéterminés de manière telle que, dans la zone de graduation (TB) éclairée de la graduation de réseau (T) dont la période de graduation est C, les faisceaux de rayons lumineux (LBn) de sources lumineuses (Ln) respectivement voisines présentent un décalage mutuel $V = C/n$ dans la direction de mesure X.
   e) l'unité de capteurs est reliée à l'unité d'exploitation de phase (PV) de manière telle que le signal de lecture périodique (S) produit par l'unité de capteurs (SE) soit amené à l'unité d'exploitation de phase (PV).

2. Dispositif de mesure selon la revendication 1, caractérisé en ce qu'un condenseur (K) commun est associé aux n sources lumineuses (Ln).

3. Dispositif de mesure selon la revendication 1, caractérisé en ce que la graduation de lecture (AT) du dispositif de lecture (A) est agencée sur la face de la plaque de lecture (AP) opposée à la graduation (T) du support de graduation (TT) afin d'obtenir la distance a, et en ce que la distance entre l'autre face de la plaque de lecture (AP) et la face tournée vers elle du support de graduation (TT) est égale à c.

4. Dispositif de mesure selon la revendication 1, caractérisé en ce que, pour maintenir constante la distance a entre la graduation de lecture (AT) et la graduation (T), le dispositif de lecture (A) est guidé sur le support de graduation (TT).

5. Dispositif de mesure selon la revendication 1, caractérisé en ce que les n sources lumineuses (Ln) sont agencées sous une forme intégrée sur un substrat avec une distance entre elles b dans la direction de mesure X.

6. Dispositif de mesure selon la revendication 1, caractérisé en ce que les n sources lumineuses (Ln) sont disposées séparément sur une droite inclinée par rapport à la direction de mesure X avec une distance entre elles b dans la direction de mesure X.

7. Dispositif de mesure selon la revendication 1, caractérisé photo-électrique de référence et un régulateur régulant les n tensions d'alimentation (VSn).

8. Dispositif de mesure selon la revendication 1, caractérisé en ce que la graduation (T) du support de graduation (TT) est protégée par un verre protecteur scellé.

9. Dispositif de mesure selon la revendication 1, caractérisé en ce que la cellule photo-électrique (P) de l'unité de capteurs (SE) est protégée par une plaque transparente (TP) montée devant elle.

10. Dispositif de mesure selon les revendications 3 et 9, caractérisé en ce que la distance entre la surface de la plaque transparente (TP) et la face tournée vers elle du support de graduation (TT) est aussi égale à c.

11. Dispositif de mesure selon la revendication 1, caractérisé en ce que le signal de lecture périodique (S) ainsi qu'une tension d'alimentation (VSn) sont amenés à l'unité d'exploitation de phase (PV).

# Fig. 1

# Fig. 2

EP 0 350 586 B1